# EUROPÄISCHE PATENTSCHRIFT

(11) **EP 3 696 037 B1**
(45) Veröffentlichungstag und Bekanntmachung des Hinweises auf die Patenterteilung: **29.12.2021**
(21) Anmeldenummer: 20162468.1
(22) Anmeldetag: 08.04.2019
(51) Int. Cl.: B60W 20/15, B60W 30/188, B60W 10/06, B60W 10/08, F02D 41/00, F02D 19/02, F02D 19/08

(54) **VERFAHREN ZUM ADAPTIEREN EINER VERBRENNUNGSKRAFTMASCHINE EINES HYBRIDEN ANTRIEBSSYSTEMS EINES KRAFTFAHRZEUGS AN EINEN GASFÖRMIGEN KRAFTSTOFF MIT UNBEKANNTER KRAFTSTOFFQUALITÄT, HYBRIDES ANTRIEBSSYSTEM UND KRAFTFAHRZEUG**
METHOD FOR ADAPTING A COMBUSTION ENGINE OF A HYBRID DRIVE SYSTEM OF A MOTOR VEHICLE TO A GASEOUS FUEL WITH UNKNOWN QUALITY, HYBRID DRIVE SYSTEM AND VEHICLE
PROCÉDÉ D'ADAPTATION D'UN MOTEUR À COMBUSTION INTERNE D'UN SYSTÈME D'ENTRAÎNEMENT HYBRIDE D'UN VÉHICULE AUTOMOBILE À UN CARBURANT GAZEUX DE QUALITÉ DU CARBURANT INCONNU, SYSTÈME D'ENTRAÎNEMENT HYBRIDE ET VÉHICULE AUTOMOBILE

(30) Priorität: 17.04.2018 DE 102018109117
(43) Veröffentlichungstag der Anmeldung: 19.08.2020
(62) Teilanmeldung aus: 19167899.4
(73) Patentinhaber: VOLKSWAGEN AG, 38440 Wolfsburg (DE)
(72) Erfinder: Weß, Alexander, 38442 Wolfsburg (DE); Engler, Frank, 38448 Wolfsburg (DE); Koppenhagen, Dr. Kay, 38126 Braunschweig (DE)
(74) Vertreter: Patentanwälte Bals & Vogel

(56) Entgegenhaltungen:
- WO-A2-2008/059337
- DE-A1-102007 043 607
- GB-A- 2 498 533
- JP-A- 2015 174 491

## Beschreibung

Die vorliegende Erfindung betrifft ein Verfahren zum Adaptieren einer Verbrennungskraftmaschine eines hybriden Antriebssystems eines Kraftfahrzeugs an einen gasförmigen Kraftstoff mit unbekannter Kraftstoffqualität. Ferner betrifft die Erfindung ein hybrides Antriebssystem für ein Kraftfahrzeug sowie ein Kraftfahrzeug mit einem hybriden Antriebssystem.

Die Kraftstoffqualität eines gasförmigen Kraftstoffs ist ein Maß für eine chemische Zusammensetzung sowie chemische Eigenschaften des gasförmigen Kraftstoffs. Unterschiedliche Kraftstoffqualitäten gasförmiger Kraftstoffe äußern sich beispielsweise in unterschiedlichen Anteilen von bspw. Methan, Kohlendioxid und Stickstoff, aus denen unterschiedliche Heizwerte, Luftbedarfe, Klopffestigkeiten oder dergleichen resultieren. Insbesondere nach einem Tankvorgang mit einem gasförmigen Kraftstoff weist der Kraftstofftank einen Kraftstoff auf, dessen Kraftstoffqualität nicht genau bekannt ist, da die Kraftstoffqualitäten gasförmiger Kraftstoffe verschiedener Tankstellen stark variieren können. Aus diesem Grund ist insbesondere nach einem Tankvorgang eine Bestimmung der Kraftstoffqualität erforderlich, um die Verbrennungskraftmaschine mittels einer Motorsteuerungsvorrichtung optimal zu betreiben.

Es sind bivalente Antriebssysteme bekannt, bei welchen eine Verbrennungskraftmaschine sowohl mit einem flüssigen Kraftstoff, wie z.B. Ottokraftstoff, und einem gasförmigen Kraftstoff, wie z. B. Erdgas, insbesondere komprimiertes Erdgas, welches auch als "CNG" (compressed natural gas) bezeichnet wird, betreibbar ist. Gasförmige Kraftstoffe haben den Nachteil, dass die Kraftstoffqualität des gasförmigen Kraftstoffs im Gegensatz zur Kraftstoffqualität eines flüssigen Kraftstoffs besonders starken Schwankungen unterliegt. Zum optimalen Betreiben der Verbrennungskraftmaschine mit einem gasförmigen Kraftstoff ist daher zunächst eine Ermittlung der Kraftstoffqualität des gasförmigen Kraftstoffs erforderlich. Bei bivalenten Antriebssystemen ist eine solche Ermittlung unter Verwendung des flüssigen Kraftstoffs möglich. Bei monovalenten Antriebssystemen mit gasförmigem Kraftstoff ist kein flüssiger Kraftstoff für eine solche Ermittlung der Kraftstoffqualität verfügbar, sodass alternative Verfahren bereitgestellt werden müssen.

Aus der DE 10 2006 050 357 A1 ist ein Verfahren zum Bestimmen einer Zusammensetzung eines Gasgemisches in einem Kraftstofftank bekannt. Über einen definierten Zeitraum wird hierbei Gas aus dem Kraftstofftank entnommen. Über eine ermittelte Masse des entnommenen Gases sowie eine Druckdifferenz eines Drucks im Kraftstofftank vor der Entnahme und eines Drucks im Kraftstofftank nach der Entnahme kann auf die Zusammensetzung des gasförmigen Kraftstoffs rückgeschlossen werden. Ein derartiges Verfahren ist relativ ungenau und kann zur Bestimmung falscher Kraftstoffqualitäten führen. Die US 2017/0268438 A1 betrifft ein Verfahren zum Betreiben einer bivalenten Verbrennungskraftmaschine, bei welchem eine Ermittlung der Kraftstoffqualität des gasförmigen Kraftstoffs durch Messung von Abgasen unter Verwendung einer Lambda-Sonde erfolgt. Die EP 1 143 134 A1 offenbart ein Verfahren zum Bestimmen einer Motorleistung einer Verbrennungskraftmaschine mittels eines Generators sowie einer Vorrichtung zum Bestimmen eines Drehmoments des Generators. Aus der DE 10 2009 017 207 A1 ist ein Motorsteuerungssystem bekannt, mittels welchem eine Kraftstoffqualität aus einem ermittelten Drehmoment und einer Drehzahlveränderung einer Verbrennungskraftmaschine berechenbar ist. Die JP 2015 174491 A, WO 2008/059337 A2, GB 2 498 533 A, und DE 10 2007 043607 A1 offenbaren weitere Motorsteuerungssysteme.

Bekannte Vorrichtungen und Verfahren zum Bestimmen einer Kraftstoffqualität eines gasförmigen Kraftstoffs für eine Verbrennungskraftmaschine eines hybriden Antriebssystems eines Kraftfahrzeugs haben den Nachteil, dass eine Kraftstoffqualität nur sehr aufwendig sowie unter Verwendung kostenintensiver Hilfsmittel bestimmbar ist. Zudem haben einige gattungsgemäße Verfahren und Vorrichtungen den Nachteil, dass die Kraftstoffqualität gasförmiger Kraftstoffe nur verhältnismäßig ungenau bestimmbar ist.

Es ist daher Aufgabe der vorliegenden Erfindung, die voranstehend beschriebenen Nachteile bei einem Verfahren zum Adaptieren einer Verbrennungskraftmaschine eines hybriden Antriebssystems eines Kraftfahrzeugs an einen gasförmigen Kraftstoff mit unbekannter Kraftstoffqualität, einem hybriden Antriebssystem für ein Kraftfahrzeug sowie einem Kraftfahrzeug mit einem hybriden Antriebssystem zu beheben oder zumindest teilweise zu beheben. Insbesondere ist es Aufgabe der vorliegenden Erfindung ein Verfahren, ein Antriebssystem sowie ein Kraftfahrzeug zu schaffen, die auf eine einfache und kostengünstige Art und Weise eine zuverlässige sowie genaue Adaption der Verbrennungskraftmaschine an einen gasförmigen Kraftstoff mit unbekannter Kraftstoffqualität sicherstellen.

Voranstehende Aufgabe wird durch die Patentansprüche gelöst. Demnach wird die Aufgabe durch ein Verfahren zum Adaptieren einer Verbrennungskraftmaschine eines hybriden Antriebssystems eines Kraftfahrzeugs an einen gasförmigen Kraftstoff mit unbekannter Kraftstoffqualität mit den Merkmalen des unabhängigen Anspruchs 1, durch ein hybrides Antriebssystem für ein Kraftfahrzeug mit den Merkmalen des nebengeordneten Anspruchs 7 sowie durch ein Kraftfahrzeug mit einem hybriden Antriebssystem den Merkmalen des nebengeordneten Anspruchs 9 gelöst. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen hybriden Antriebssystem für ein Kraftfahrzeug sowie dem Kraftfahrzeug mit dem hybriden Antriebssystem und jeweils umgekehrt, sodass bezüglich der Offenbarung zu den einzelnen Erfindungsaspekten stets wechselseitig Bezug genommen wird beziehungsweise werden kann.

Gemäß einem ersten Aspekt der Erfindung wird die Aufgabe durch ein Verfahren zum Adaptieren einer Verbrennungskraftmaschine eines hybriden Antriebssystems eines Kraftfahrzeugs an einen gasförmigen Kraftstoff mit unbekannter Kraftstoffqualität gelöst, wobei das hybride Antriebssystem eine mit der Verbrennungskraftmaschine mechanisch koppelbare Elektromaschine aufweist. Das erfindungsgemäße Verfahren weist die folgenden Schritte auf:
- Antreiben der Verbrennungskraftmaschine mittels der Elektromaschine des hybriden Antriebssystems auf eine Schleppdrehzahl,
- Einbringen des gasförmigen Kraftstoffs in die Verbrennungskraftmaschine mittels einer Kraftstoffeinlassvorrichtung des hybriden Antriebssystems,
- Zünden des gasförmigen Kraftstoffs mittels einer Zündvorrichtung des hybriden Antriebssystems,
- Ermitteln eines IST-Betriebsdrehmoments der Verbrennungskraftmaschine mittels der mit der Verbrennungskraftmaschine mechanisch gekoppelten Elektromaschine,
- Vergleichen des ermittelten IST-Betriebsdrehmoments mit einem bei Verwendung eines Kraftstoffs mit einer bekannten Kraftstoffqualität zu erwartenden SOLL-Betriebsdrehmoment der Verbrennungskraftmaschine mittels einer Vergleichsvorrichtung,
- Bestimmen eines Korrekturwerts zur Anpassung des IST-Betriebsdrehmoments der Verbrennungskraftmaschine an das SOLL-Betriebsdrehmoment mittels einer Motorsteuerungsvorrichtung, und
- Anpassen des IST-Betriebsdrehmoments der Verbrennungskraftmaschine an das SOLL-Betriebsdrehmoment auf Basis des Korrekturwerts mittels der Motorsteuerungsvorrichtung des hybriden Antriebssystems.

Beim Antreiben der Verbrennungskraftmaschine wird ein Schleppmoment der Verbrennungskraftmaschine mittels der Elektromaschine ermittelt, wobei das ermittelte Schleppmoment bei der Bestimmung der Kraftstoffqualität des gasförmigen Kraftstoffs berücksichtigt wird.

Das zur Durchführung des Verfahrens verwendete hybride Antriebssystem weist eine Verbrennungskraftmaschine und eine Elektromaschine auf. Bei der Durchführung des erfindungsgemäßen Verfahrens ist die Elektromaschine mit der Verbrennungskraftmaschine mechanisch, gekoppelt, insbesondere über ein nicht schaltbares Getriebe, insbesondere ein einstufiges Getriebe. In dem mechanisch gekoppelten Zustand steht eine Drehzahl der Verbrennungskraftmaschine mit einer Drehzahl der Elektromaschine vorzugsweise in einem vorgegebenen, bekannten oder bestimmbaren vorzugsweise festen Drehzahlverhältnis. Die Elektromaschine ist zum Antreiben der Verbrennungskraftmaschine, insbesondere zum Starten der Verbrennungskraftmaschine, ausgebildet. Demnach weist die Elektromaschine zumindest eine Minimalleistung auf, welche zum Überwinden eines Schleppmoments der Verbrennungskraftmaschine ausreicht. Vorzugsweise weist die Elektromaschine eine derart größere Leistung als die Minimalleistung auf, sodass ein komfortables Starten der Verbrennungskraftmaschine gewährleistet ist. Weiter bevorzugt ist die Elektromaschine zum Unterstützen der Verbrennungskraftmaschine zum Antreiben des Kraftfahrzeugs, insbesondere zum sogenannten Boosten, ausgebildet.

Erfindungsgemäß wird die Verbrennungskraftmaschine mittels der Elektromaschine des hybriden Antriebssystems auf eine Schleppdrehzahl angetrieben. Hierfür wird die Elektromaschine von einer Motorsteuerungsvorrichtung des hybriden Antriebssystems mit elektrischem Strom beaufschlagt, welcher vorzugsweise von einer Batterie und/oder einer Brennstoffzelle des hybriden Antriebssystems bereitgestellt wird. Die Schleppdrehzahl ist vorzugsweise mindestens so hoch wie eine Startdrehzahl der Verbrennungskraftmaschine, bei welcher ein sicheres Starten der Verbrennungskraftmaschine gerade gewährleistet ist. Es kann erfindungsgemäß vorgesehen sein, dass die Schleppdrehzahl höher als die Startdrehzahl der Verbrennungskraftmaschine gewählt ist. Das Antreiben erfolgt vorzugsweise mit einer Drehrichtung, welche einer Betriebsdrehrichtung der Verbrennungskraftmaschine bei regulärem Kraftstoffbetrieb entspricht.

Das Einbringen des gasförmigen Kraftstoffs in die Verbrennungskraftmaschine erfolgt mittels der Kraftstoffeinlassvorrichtung des hybriden Antriebssystems, insbesondere über Einlassventile der Kraftstoffeinlassvorrichtung. Der gasförmige Kraftstoff wird dabei in mindestens einen Zylinder der Verbrennungskraftmaschine, vorzugsweise in sämtliche Zylinder der Verbrennungskraftmaschine, eingebracht bzw. eingeblasen. Das Einbringen des gasförmigen Kraftstoffs in die verschiedenen Zylinder erfolgt vorzugsweise zeitversetzt in Abhängigkeit von Kolbenstellungen von den einzelnen Zylindern zugeordneten Kolben. Eine initiale Einbringmenge des gasförmigen Kraftstoffs wird vorzugsweise derart festgelegt, dass diese einer Einbringmenge eines gasförmigen Kraftstoffs mit der Referenzkraftstoffqualität zum Antreiben der Verbrennungskraftmaschine mit der Schleppdrehzahl entspricht.

Nachfolgend wird der gasförmige Kraftstoff mittels der Zündvorrichtung des hybriden Antriebssystems gezündet. Das Zünden erfolgt vorzugsweise in Abhängigkeit von Kolbenstellungen der Kolben der verschiedenen Zylinder der Verbrennungskraftmaschine. Durch das Zünden wird der gasförmige Kraftstoff verbrannt und expandiert. Auf diese Weise wird die Verbrennungskraftmaschine gestartet. Das Einbringen des gasförmigen Kraftstoffs sowie das Zünden erfolgt vorzugsweise fortlaufend getaktet, sodass die Verbrennungskraftmaschine hierdurch vorzugsweise selbstständig läuft und das IST-Betriebsdrehmoment erzeugt.

Mittels der mit der Verbrennungskraftmaschine mechanisch gekoppelten Elektromaschine wird das IST-Betriebsdrehmoment der Verbrennungskraftmaschine ermittelt. Die Elektromaschine wird hierfür erfindungsgemäß im Generatorbetrieb betrieben.

Mittels der Vergleichsvorrichtung wird das ermittelte IST-Betriebsdrehmoment mit einem SOLL-Betriebsdrehmoment der Verbrennungskraftmaschine, welches bei Verwendung eines Kraftstoffs mit einer bekannten Kraftstoffqualität sowie gleicher Einbringmenge wie die aktuelle Einbringmenge des aktuellen gasförmigen Kraftstoffs zu erwarten ist, verglichen. Bei Betrieb der Verbrennungskraftmaschine mit einem gasförmigen Kraftstoff, welcher die bekannte Kraftstoffqualität aufweist und mit derselben Menge wie der bei der Durchführung des Verfahrens eingebrachte gasförmige Kraftstoff in die Verbrennungskraftmaschine eingebracht wird, würde die Verbrennungskraftmaschine bei einem vordefinierten Schleppmoment das SOLL-Betriebsdrehmoment bereitstellen. Das vordefinierte Schleppmoment beruht auf Schleppverlusten der Verbrennungskraftmaschine, welche insbesondere aufgrund von Reibung und Massenträgheit gewöhnlich auftreten und somit bei einer bekannten Verbrennungskraftmaschine mit einer bestimmten Prognosesicherheit bestimmbar sind. Eine Abweichung des IST-Betriebsdrehmoments vom SOLL-Betriebsdrehmoment bedeutet, dass der aktuell verwendete gasförmige Kraftstoff eine andere Kraftstoffqualität als die dem SOLL-Betriebsdrehmoment zugrundeliegende Kraftstoffqualität aufweist.

Anschließend erfolgt mittels der Motorsteuerungsvorrichtung des hybriden Antriebssystems eine Bestimmung des Korrekturwerts zur Anpassung des IST-Betriebsdrehmoments der Verbrennungskraftmaschine an das SOLL-Betriebsdrehmoment. Der Korrekturwert kann beispielsweise eine Anpassung einer Einbringmenge des gasförmigen Kraftstoffs in die Verbrennungskraftmaschine berücksichtigen. Der Korrekturwert ist ein Indikator für die Gasqualität. Aus dem Korrekturwert ist die Gasqualität beispielsweise mittels der Motorsteuerungsvorrichtung bestimmbar.

Mittels der Motorsteuerungsvorrichtung erfolgt eine Adaption der Verbrennungskraftmaschine an den aktuell verwendeten gasförmigen Kraftstoff auf Basis des Korrekturwerts. Die Adaption kann beispielsweise durch derartiges Verändern der Einbringmenge des gasförmigen Kraftstoffs in die Verbrennungskraftmaschine, dass das IST-Betriebsdrehmoment der Verbrennungskraftmaschine dem SOLL-Betriebsdrehmoment angenähert wird. Die Veränderung der Einbringmenge wird mittels der Kraftstoffeinlassvorrichtung realisiert. Dabei wird die Kraftstoffmenge des in die Verbrennungskraftmaschine eingebrachten gasförmigen Kraftstoffs mittels der Kraftstoffeinlassvorrichtung in Abhängigkeit des ermittelten IST-Betriebsdrehmoments derart variiert, dass die Kraftstoffmenge erhöht wird, wenn das ermittelte IST-Betriebsdrehmoment kleiner als das SOLL-Betriebsdrehmoment ist, bzw. dass die Kraftstoffmenge verringert wird, wenn das ermittelte IST-Betriebsdrehmoment größer als das SOLL-Betriebsdrehmoment ist.

Schließlich wird beim Antreiben der Verbrennungskraftmaschine mittels der Elektromaschine das Schleppmoment der Verbrennungskraftmaschine ermittelt und bei der Bestimmung der Kraftstoffqualität des gasförmigen Kraftstoffs berücksichtigt. Das Schleppmoment wird vorzugsweise vor dem Einbringen des gasförmigen Kraftstoffs in die Verbrennungskraftmaschine oder zumindest vor dem Zünden des gasförmigen Kraftstoffs ermittelt, sodass die Ermittlung des Schleppmoments nicht durch diese Faktoren verfälscht wird. Das Ermitteln des Schleppmoments hat den Vorteil, dass bei der Bestimmung der Kraftstoffqualität ein tatsächliches Schleppmoment der Verbrennungskraftmaschine verwendbar ist, welches einen direkten Einfluss auf das IST-Betriebsdrehmoment hat. Wenn das tatsächliche Schleppmoment vom vordefinierten Schleppmoment abweicht, weicht auch das ermittelte IST-Betriebsdrehmoment von einem IST-Betriebsdrehmoment bei einer Verbrennungskraftmaschine, welche das vordefinierte Schleppmoment aufweist. Durch Berücksichtigung der Abweichung des tatsächlichen Schleppmoments vom vordefinierten Schleppmoment kann somit vermieden werden, dass aus der Abweichung der IST-Betriebsdrehmomente falsche Rückschlüsse auf die Kraftstoffqualität gezogen werden.

Ein erfindungsgemäßes Verfahren zum Adaptieren einer Verbrennungskraftmaschine eines hybriden Antriebssystems eines Kraftfahrzeugs an einen gasförmigen Kraftstoff mit unbekannter Kraftstoffqualität hat gegenüber herkömmlichen Verfahren den Vorteil, dass mit einfachen Mitteln sowie auf eine kostengünstige Art und Weise die Verbrennungskraftmaschine auf die unbekannte Kraftstoffqualität des gasförmigen Kraftstoffs zuverlässig einstellbar ist, ohne, dass hierfür eine explizite Bestimmung der Kraftstoffqualität erforderlich ist oder eine weitere Energiequelle (z.B. flüssiger Kraftstoff) erforderlich ist. Auf diese Weise sind ein Einstellen der Verbrennungskraftmaschine auf einen neuen gasförmigen Kraftstoff sowie eine Betriebssicherheit und ein Wirkungsgrad der Verbrennungskraftmaschine erheblich verbesserbar.

Es ist erfindungsgemäß bevorzugt, dass während des Ermittelns des IST-Betriebsdrehmoments die Verbrennungskraftmaschine mittels der Elektromaschine auf der Schleppdrehzahl gehalten wird. Mittels der Elektromaschine wird somit ein Generatormoment gezielt gesteuert, um die Verbrennungskraftmaschine entsprechend abzubremsen. Auf diese Weise ist eine direkte Messung des IST-Betriebsdrehmoments möglich und damit ist ebenfalls die Genauigkeit der Bestimmung des IST-Betriebsdrehmoments mit einfachen Mitteln sowie kostengünstig verbessert.

Weiter bevorzugt wird die Verbrennungskraftmaschine mittels der Elektromaschine des hybriden Antriebssystems auf unterschiedliche Drehzahlen angetrieben, wobei IST-Betriebsdrehmomente für die unterschiedlichen Drehzahlen ermittelt und mit entsprechenden unterschiedlichen SOLL-Betriebsdrehmomenten verglichen werden, wobei die Verhältnisse der IST-Betriebsdrehmomente und der zugehörigen SOLL-Betriebsdrehmomente beim Anpassen der Einbringmenge des gasförmigen Kraftstoffs in die Verbrennungskraftmaschine mittels einer Motorsteuerungsvorrichtung des hybriden Antriebssystems berücksichtigt werden. Auf diese Weise können unterschiedliche Betriebspunkte der Verbrennungskraftmaschine bei der Adaption auf den gasförmigen Kraftstoff berücksichtigt werden. Somit ist eine genauere sowie zuverlässige Adaption mit einfachen Mitteln sowie kostengünstig sichergestellt.

Vorzugsweise wird eine Elektromaschine verwendet, welche zum Antreiben des Kraftfahrzeugs ausgebildet ist. Eine derartige Elektromaschine unterscheidet sich somit von einem Riemenstartergenerator, welcher lediglich zum Starten der Verbrennungskraftmaschine auf eine Startdrehzahl und ggf. zum Unterstützen der Verbrennungskraftmaschine durch Bereitstellen eines Unterstützungsdrehmoments ausgebildet ist. Eine solche Elektromaschine hat den Vorteil, dass das Antreiben der Verbrennungskraftmaschine auf die Schleppdrehzahl verbessert ist, wobei die Schleppdrehzahl wesentlich flexibler festlegbar ist und deutlich höher als die Startdrehzahl gewählt werden kann. Somit kann das erfindungsgemäße Verfahren mit einer wesentlich größeren Zahl an Varianten durchgeführt werden.

In einer alternativen Ausgestaltung des Verfahrens wird eine Elektromaschine verwendet, welche als Riemenstartergenerator oder Anlasser des Kraftfahrzeugs ausgebildet ist. Mittels eines Anlassers oder Riemenstartergenerators ist die Verbrennungskraftmaschine zum Starten auf die Startdrehzahl bringbar. Es kann erfindungsgemäß vorgesehen sein, dass der Riemenstartergenerator zusätzlich zum Unterstützen der Verbrennungskraftmaschine durch Bereitstellen eines Unterstützungsdrehmoments ausgebildet ist. Eine derartige Elektromaschine hat den Vorteil, dass die Kosten des hybriden Antriebsstrangs reduziert sind, wobei ein zuverlässiges Adaptieren der Verbrennungskraftmaschine an einen gasförmigen Kraftstoff mit unbekannter Kraftstoffqualität weiterhin gewährleistet ist.

Weiter bevorzugt wird die Kraftstoffmenge des in die Verbrennungskraftmaschine eingebrachten gasförmigen Kraftstoffs mittels der Kraftstoffeinlassvorrichtung iterativ derart verändert, dass das IST-Betriebsdrehmoment dem SOLL-Betriebsdrehmoment angepasst wird. Demnach erfolgt eine Einstellung der Verbrennungskraftmaschine auf den gasförmigen Kraftstoff derart, dass eine Abweichung der Kraftstoffqualität von der Referenzkraftstoffqualität vollständig kompensiert wird. Der Betrieb der Verbrennungskraftmaschine ist somit weiter verbesserbar.

Gemäß einem zweiten Aspekt der Erfindung wird die Aufgabe durch ein hybrides Antriebssystem für ein Kraftfahrzeug gelöst. Das hybride Antriebssystem weist eine mit einem gasförmigen Kraftstoff betreibbare Verbrennungskraftmaschine, eine Kraftstoffeinlassvorrichtung zum Einbringen des gasförmigen Kraftstoffs in die Verbrennungskraftmaschine, eine Zündvorrichtung zum Zünden des gasförmigen Kraftstoffs, eine mit der Verbrennungskraftmaschine mechanisch koppelbare Elektromaschine, eine Vergleichsvorrichtung zum Vergleichen des ermittelten IST-Betriebsdrehmoments mit einem bei Verwendung eines Kraftstoffs mit einer bekannten Kraftstoffqualität zu erwartenden SOLL-Betriebsdrehmoment der Verbrennungskraftmaschine und eine Motorsteuerungsvorrichtung zum Steuern der Verbrennungskraftmaschine, zum Bestimmen eines Korrekturwerts zum Anpassen des IST-Betriebsdrehmoments der Verbrennungskraftmaschine an das SOLL-Betriebsdrehmoment sowie zum Anpassen des IST-Betriebsdrehmoments der Verbrennungskraftmaschine an das SOLL-Betriebsdrehmoment auf Basis des Korrekturwerts, insbesondere durch Anpassen einer Einbringmenge des gasförmigen Kraftstoffs in die Verbrennungskraftmaschine, auf. Erfindungsgemäß ist das hybride Antriebssystem zur Durchführung des erfindungsgemäßen Verfahrens ausgebildet.

Die Elektromaschine ist erfindungsgemäß mit der Verbrennungskraftmaschine mechanisch, insbesondere schlupffrei, koppelbar, insbesondere über ein nicht schaltbares Getriebe, insbesondere ein einstufiges Getriebe, des hybriden Antriebssystems. In dem mechanisch gekoppelten Zustand steht eine Drehzahl der Verbrennungskraftmaschine mit einer Drehzahl der Elektromaschine vorzugsweise in einem vorgegebenen Drehzahlverhältnis. Die Elektromaschine ist zum Antreiben der Verbrennungskraftmaschine, insbesondere zum Starten der Verbrennungskraftmaschine, ausgebildet. Demnach weist die Elektromaschine zumindest eine Minimalleistung auf, welche zum Überwinden eines Schleppmoments der Verbrennungskraftmaschine ausreicht. Vorzugsweise weist die Elektromaschine eine derart größere Leistung als die Minimalleistung auf, sodass ein komfortables Starten der Verbrennungskraftmaschine gewährleistet ist. Weiter bevorzugt ist die Elektromaschine zum Unterstützen der Verbrennungskraftmaschine zum Antreiben des Kraftfahrzeugs, insbesondere zum sogenannten Boosten, ausgebildet.

Die Elektromaschine ist vorzugsweise zum Antreiben der Verbrennungskraftmaschine auf eine Schleppdrehzahl ausgebildet. Hierfür ist die Elektromaschine von einer Motorsteuerungsvorrichtung des hybriden Antriebssystems mit elektrischem Strom beaufschlagbar, welcher vorzugsweise von einer Batterie und/oder einer Brennstoffzelle des hybriden Antriebssystems bereitstellbar ist. Die Schleppdrehzahl ist vorzugsweise mindestens so hoch wie eine Startdrehzahl der Verbrennungskraftmaschine, bei welcher ein sicheres Starten der Verbrennungskraftmaschine gerade gewährleistet ist. Es kann erfindungsgemäß vorgesehen sein, dass die Schleppdrehzahl höher als die Startdrehzahl der Verbrennungskraftmaschine gewählt ist. Ferner ist die Elektromaschine vorzugsweise zum Antreiben der Verbrennungskraftmaschine mit einer Drehrichtung ausgebildet, welche einer Betriebsdrehrichtung der Verbrennungskraftmaschine bei regulärem Betrieb mit einem gasförmigen Kraftstoff entspricht. Erfindungsgemäß ist die Elektromaschine zum Ermitteln des IST-Betriebsdrehmoment der Verbrennungskraftmaschine, insbesondere im Generatorbetrieb der Elektromaschine, ausgebildet.

Die Kraftstoffeinlassvorrichtung des hybriden Antriebssystems ist zum Einbringen des gasförmigen Kraftstoffs in die Verbrennungskraftmaschine ausgebildet. Hierfür weist die Kraftstoffeinlassvorrichtung vorzugsweise mehrere Einlassventile auf. Vorzugsweise ist die Kraftstoffeinlassvorrichtung zum zeitversetzten Einbringen des gasförmigen Kraftstoffs in verschiedene Zylinder der Verbrennungskraftmaschine, insbesondere in Abhängigkeit von Kolbenstellungen von den einzelnen Zylindern zugeordneten Kolben der Verbrennungskraftmaschine, ausgebildet.

Die Zündvorrichtung des hybriden Antriebssystems ist zum Zünden des eingebrachten gasförmigen Kraftstoffs, vorzugsweise in Abhängigkeit von Kolbenstellungen der Kolben der verschiedenen Zylinder der Verbrennungskraftmaschine, ausgebildet. Die Kraftstoffeinlassvorrichtung und die Zündvorrichtung sind vorzugsweise derart ausgebildet, dass das Einbringen sowie das Zünden des gasförmigen Kraftstoffs fortlaufend getaktet durchführbar ist.

Die Vergleichsvorrichtung ist zum Vergleichen des ermittelten IST-Betriebsdrehmoments mit einem bei Verwendung eines Kraftstoffs mit einer bekannten Kraftstoffqualität zu erwartenden SOLL-Betriebsdrehmoment der Verbrennungskraftmaschine ausgebildet. Die Motorsteuerungsvorrichtung ist zum Steuern der Verbrennungskraftmaschine, zum Bestimmen des Korrekturwerts zur Anpassung des IST-Betriebsdrehmoments der Verbrennungskraftmaschine an das SOLL-Betriebsdrehmoment sowie zum Anpassen des IST-Betriebsdrehmoments der Verbrennungskraftmaschine an das SOLL-Betriebsdrehmoment auf Basis des Korrekturwerts, insbesondere durch Anpassen einer Einbringmenge des gasförmigen Kraftstoffs in die Verbrennungskraftmaschine ausgebildet. Vorzugsweise ist die Motorsteuerungsvorrichtung auch zum Steuern der Elektromaschine ausgebildet. Es kann erfindungsgemäß vorgesehen sein, dass die Vergleichsvorrichtung als Teil der Motorsteuerungsvorrichtung ausgebildet ist.

Bei dem beschriebenen hybriden Antriebssystem für ein Kraftfahrzeug ergeben sich sämtliche Vorteile, die bereits zu einem Verfahren zum Adaptieren einer Verbrennungskraftmaschine eines hybriden Antriebssystems eines Kraftfahrzeugs an einen gasförmigen Kraftstoff mit unbekannter Kraftstoffqualität gemäß dem ersten Aspekt der Erfindung beschrieben worden sind. Demnach hat das erfindungsgemäße hybride Antriebssystem gegenüber herkömmlichen hybriden Antriebssystemen den Vorteil, dass mit einfachen Mitteln sowie auf eine kostengünstige Art und die Verbrennungskraftmaschine auf die unbekannte Kraftstoffqualität des gasförmigen Kraftstoffs zuverlässig einstellbar ist, ohne dass hierfür eine explizite Bestimmung der Kraftstoffqualität erforderlich ist. Auf diese Weise sind ein Einstellen der Verbrennungskraftmaschine auf einen neuen gasförmigen Kraftstoff sowie eine Betriebssicherheit und ein Wirkungsgrad der Verbrennungskraftmaschine erheblich verbesserbar.

Gemäß einer bevorzugten Weiterbildung des erfindungsgemäßen hybriden Antriebssystems ist die Elektromaschine zum Antreiben des Kraftfahrzeugs oder als Riemenstartergenerator oder als Anlasser ausgebildet. Eine zum Antreiben des Kraftfahrzeugs ausgebildete Elektromaschine unterscheidet sich somit von einem Riemenstartergenerator, welcher lediglich zum Starten der Verbrennungskraftmaschine auf die Startdrehzahl und ggf. zum Unterstützen der Verbrennungskraftmaschine durch Bereitstellen eines Unterstützungsdrehmoments ausgebildet ist. Eine zum Antreiben des Kraftfahrzeugs ausgebildete Elektromaschine hat den Vorteil, dass das Antreiben der Verbrennungskraftmaschine auf die Schleppdrehzahl verbessert ist, wobei die Schleppdrehzahl wesentlich flexibler festlegbar ist und deutlich höher als die Startdrehzahl gewählt werden kann. Somit kann das erfindungsgemäße Verfahren mit einer wesentlich größeren Zahl an Varianten durchgeführt werden. Eine als Riemenstartergenerator oder Anlasser ausgebildete Elektromaschine hat den Vorteil, dass die Kosten des hybriden

Antriebsstrangs reduziert sind, wobei ein zuverlässiges Adaptieren der Verbrennungskraftmaschine an einen gasförmigen Kraftstoff mit unbekannter Kraftstoffqualität weiterhin gewährleistet ist.

Gemäß einem dritten Aspekt der Erfindung wird die Aufgabe durch ein Kraftfahrzeug mit einem hybriden Antriebssystem gelöst. Erfindungsgemäß ist das hybride Antriebssystem gemäß einem erfindungsgemäßen hybriden Antriebssystem ausgebildet.

Bei dem beschriebenen Kraftfahrzeug ergeben sich sämtliche Vorteile, die bereits zu einem Verfahren zum Adaptieren einer Verbrennungskraftmaschine eines hybriden Antriebssystems eines Kraftfahrzeugs an einen gasförmigen Kraftstoff mit unbekannter Kraftstoffqualität gemäß dem ersten Aspekt der Erfindung sowie zu einem hybriden Antriebssystem für ein Kraftfahrzeug gemäß dem zweiten Aspekt der Erfindung beschrieben worden sind. Demnach hat das erfindungsgemäße Kraftfahrzeug gegenüber herkömmlichen Kraftfahrzeugen den Vorteil, dass mit einfachen Mitteln sowie auf eine kostengünstige Art und Weise die Verbrennungskraftmaschine auf die unbekannte Kraftstoffqualität des gasförmigen Kraftstoffs zuverlässig einstellbar ist, ohne dass hierfür eine explizite Bestimmung der Kraftstoffqualität erforderlich ist. Auf diese Weise sind ein Einstellen der Verbrennungskraftmaschine auf einen neuen gasförmigen Kraftstoff sowie eine Betriebssicherheit und ein Wirkungsgrad der Verbrennungskraftmaschine erheblich verbesserbar.

Ein erfindungsgemäßes Verfahren sowie ein erfindungsgemäßes hybrides Antriebssystem und ein erfindungsgemäßes Kraftfahrzeug werden nachfolgend anhand von Zeichnungen näher erläutert. Es zeigen jeweils schematisch:
- Figur 1: in einer Seitenansicht eine bevorzugte Ausführungsform eines erfindungsgemäßen Kraftfahrzeugs mit einem erfindungsgemäßen hybriden Antriebssystem, und
- Figur 2: in einem Ablaufdiagramm eine bevorzugte Ausführungsform des erfindungsgemäßen Verfahrens.

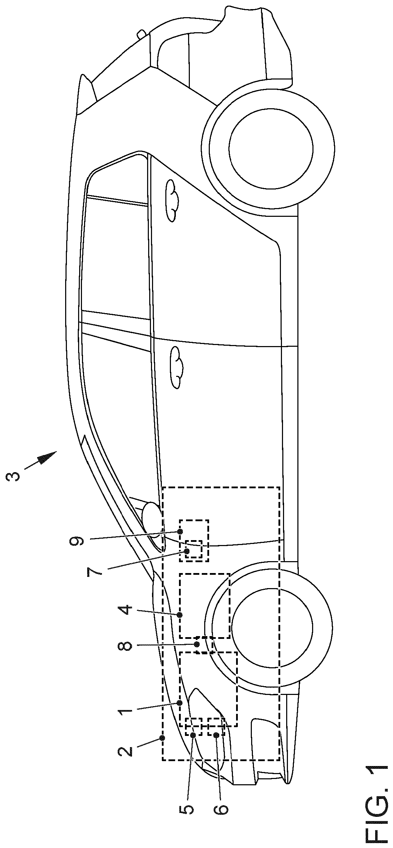

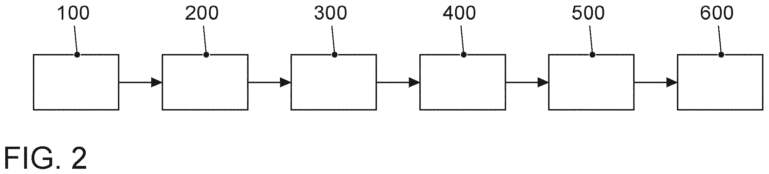

Elemente mit gleicher Funktion und Wirkungsweise sind in den Fig. 1 und 2 jeweils mit denselben Bezugszeichen versehen.

Fig. 1 zeigt eine bevorzugte Ausführungsform eines erfindungsgemäßen Kraftfahrzeugs 3 mit einem erfindungsgemäßen hybriden Antriebssystem 2 schematisch in einer Seitenansicht. Das hybride Antriebssystem 2 weist eine Verbrennungskraftmaschine 1 auf, welche über ein Getriebe 8 des hybriden Antriebssystems 2 mit einer Elektromaschine 4 des hybriden Antriebssystems 2 mechanisch gekoppelt ist. An der Verbrennungskraftmaschine 1 ist eine Kraftstoffeinlassvorrichtung 5 zum Einbringen bzw. Einblasen eines gasförmigen Kraftstoffs in die Verbrennungskraftmaschine 1 angeordnet. Ferner weist das hybride Antriebssystem 2 eine an der Verbrennungskraftmaschine 1 angeordnete Zündvorrichtung 6 zum Zünden des in die Verbrennungskraftmaschine 1 eingebrachten gasförmigen Kraftstoffs auf. Zum Steuern der Verbrennungskraftmaschine 1 sowie der Elektromaschine 4 weist das hybride Antriebssystem eine Motorsteuerungsvorrichtung 9 auf. Die Motorsteuerungsvorrichtung 9 weist zum Vergleichen des ermittelten IST-Betriebsdrehmoments mit einem bei Verwendung eines Kraftstoffs mit einer bekannten Kraftstoffqualität zu erwartenden SOLL-Betriebsdrehmoment der Verbrennungskraftmaschine 1 eine Vergleichsvorrichtung 7 auf.

In Fig. 2 ist eine bevorzugte Ausführungsform des erfindungsgemäßen Verfahrens schematisch in einem Ablaufdiagramm dargestellt. In einem ersten Verfahrensschritt 100 wird die Verbrennungskraftmaschine 1 des hybriden Antriebssystems 2 mittels der Elektromaschine 4 des hybriden Antriebssystems 2 auf eine Schleppdrehzahl angetrieben, wobei erfindungsgemäß ein Schleppmoment der Verbrennungskraftmaschine (1) mittels der Elektromaschine (4) ermittelt wird. In einem zweiten Verfahrensschritt 200 wird der gasförmige Kraftstoff mittels der Kraftstoffeinlassvorrichtung 5 des hybriden Antriebssystems 2 in die Verbrennungskraftmaschine 1 eingebracht bzw. eingeblasen. In einem dritten Verfahrensschritt 300 wird der gasförmige Kraftstoff mittels der Zündvorrichtung 6 des hybriden Antriebssystems 2 gezündet. In einem vierten Verfahrensschritt 400 wird das IST-Betriebsdrehmoment der Verbrennungskraftmaschine 1 mittels der mit der Verbrennungskraftmaschine 1 mechanisch gekoppelten Elektromaschine 4 ermittelt. Die Elektromaschine 4 wird hierbei in einem Generatorbetrieb betrieben. In einem fünften Verfahrensschritt 500 wird das ermittelte IST-Betriebsdrehmoment mit einem bei Verwendung eines Kraftstoffs mit einer bekannten Kraftstoffqualität zu erwartenden SOLL-Betriebsdrehmoment der Verbrennungskraftmaschine 1 mittels der Vergleichsvorrichtung 7 des hybriden Antriebssystems 2 verglichen, wobei erfindungsgemäß das zuvor ermittelte Schleppmoment berücksichtigt wird. In einem sechsten Verfahrensschritt 600 wird ein Korrekturwert zur Anpassung des IST-Betriebsdrehmoments der Verbrennungskraftmaschine 1 an das SOLL-Betriebsdrehmoment mittels der Motorsteuerungsvorrichtung 9 des hybriden Antriebssystems 2 bestimmt und das IST-Betriebsdrehmoment auf Basis des bestimmten Korrekturwerts mittels der Motorsteuerungsvorrichtung 9 des hybriden Antriebssystems 2 an das SOLL-Betriebsdrehmoment angepasst. Dies kann beispielsweise durch entsprechendes Anpassen einer Einbringmenge des gasförmigen Kraftstoffs in die Verbrennungskraftmaschine 1 erfolgen. Durch den Korrekturwert bzw. das Maß der Adaption kann die Gasqualität, insbesondere mittels der Motorsteuerungsvorrichtung 9, bestimmt werden.

### Bezugszeichenliste

- 1: Verbrennungskraftmaschine
- 2: hybrides Antriebssystem
- 3: Kraftfahrzeug
- 4: Elektromaschine
- 5: Kraftstoffeinlassvorrichtung
- 6: Zündvorrichtung
- 7: Vergleichsvorrichtung
- 8: Getriebe
- 9: Motorsteuerungsvorrichtung

- 100: erster Verfahrensschritt
- 200: zweiter Verfahrensschritt
- 300: dritter Verfahrensschritt
- 400: vierter Verfahrensschritt
- 500: fünfter Verfahrensschritt
- 600: sechster Verfahrensschritt

## Patentansprüche

1. Verfahren zum Adaptieren einer Verbrennungskraftmaschine (1) eines hybriden Antriebssystems (2) eines Kraftfahrzeugs (3) an einen gasförmigen Kraftstoff mit unbekannter Kraftstoffqualität, wobei das hybride Antriebssystem (2) eine mit der Verbrennungskraftmaschine (1) mechanisch koppelbare Elektromaschine (4) aufweist, aufweisend die folgenden Schritte:
- Antreiben (100)
der Verbrennungskraftmaschine (1) mittels der Elektromaschine (4) des hybriden Antriebssystems (2) auf eine Schleppdrehzahl,
- Einbringen (200)
des gasförmigen Kraftstoffs in die Verbrennungskraftmaschine (1) mittels einer Kraftstoffeinlassvorrichtung (5) des hybriden Antriebssystems (2),
- Zünden (300)
des gasförmigen Kraftstoffs mittels einer Zündvorrichtung (6) des hybriden Antriebssystems (2),
- Ermitteln (400)
eines IST-Betriebsdrehmoments der Verbrennungskraftmaschine (1) mittels der mit der Verbrennungskraftmaschine (1) mechanisch gekoppelten Elektromaschine (4), und
- Vergleichen (500)
des ermittelten IST-Betriebsdrehmoments mit einem bei Verwendung eines Kraftstoffs mit einer bekannten Kraftstoffqualität zu erwartenden SOLL-Betriebsdrehmoment der Verbrennungskraftmaschine (1) mittels einer Vergleichsvorrichtung (7),
- Bestimmen (600)
eines Korrekturwerts zur Anpassung des IST-Betriebsdrehmoments der Verbrennungskraftmaschine (1) an das SOLL-Betriebsdrehmoment mittels einer Motorsteuerungsvorrichtung (9) des hybriden Antriebssystems (2), und
- Anpassen (600)
des IST-Betriebsdrehmoments der Verbrennungskraftmaschine (1) an das SOLL-Betriebsdrehmoment auf Basis des Korrekturwerts mittels der Motorsteuerungsvorrichtung (9) des hybriden Antriebssystems (2),
**dadurch gekennzeichnet, dass** beim Antreiben (100) der Verbrennungskraftmaschine (1) ein Schleppmoment der Verbrennungskraftmaschine (1) mittels der Elektromaschine (4) ermittelt wird, wobei das ermittelte Schleppmoment bei der Bestimmung (600) der Kraftstoffqualität des gasförmigen Kraftstoffs berücksichtigt wird.

2. Verfahren nach Anspruch 1,
**dadurch gekennzeichnet,**
**dass** während des Ermittelns des IST-Betriebsdrehmoments die Verbrennungskraftmaschine (1) mittels der Elektromaschine (4) auf der Schleppdrehzahl gehalten wird.

3. Verfahren nach Anspruch 1,
**dadurch gekennzeichnet,**
**dass** die Verbrennungskraftmaschine (1) mittels der Elektromaschine (4) des hybriden Antriebssystems (2) auf unterschiedliche Drehzahlen angetrieben wird, wobei IST-Betriebsdrehmomente für die unterschiedlichen Drehzahlen ermittelt und mit entsprechenden unterschiedlichen SOLL-Betriebsdrehmomenten verglichen werden, wobei das Verhältnisse der IST-Betriebsdrehmomente und der zugehörigen SOLL-Betriebsdrehmomente beim Anpassen der Einbringmenge des gasförmigen Kraftstoffs in die Verbrennungskraftmaschine mittels einer Motorsteuerungsvorrichtung (9) des hybriden Antriebssystems (2) berücksichtigt werden.

4. Verfahren nach einem der vorangegangenen Ansprüche,
**dadurch gekennzeichnet,**
**dass** eine Elektromaschine (4) verwendet wird, welche zum Antreiben des Kraftfahrzeugs (3) ausgebildet ist.

5. Verfahren nach einem der Ansprüche 1 bis 4,
**dadurch gekennzeichnet,**
**dass** eine Elektromaschine (4) verwendet wird, welche als Riemenstartergenerator oder Anlasser des Kraftfahrzeugs (3) ausgebildet ist.

6. Verfahren nach einem der vorangegangenen Ansprüche,
**dadurch gekennzeichnet,**
**dass** die Kraftstoffmenge des in die Verbrennungskraftmaschine (1) eingebrachten gasförmigen Kraftstoffs mittels der Kraftstoffeinlassvorrichtung (5) iterativ derart verändert wird, dass das IST-Betriebsdrehmoment dem SOLL-Betriebsdrehmoment angepasst wird.

7. Hybrides Antriebssystem (2) für ein Kraftfahrzeug (3), aufweisend eine mit einem gasförmigen Kraftstoff betreibbare Verbrennungskraftmaschine (1), eine Kraftstoffeinlassvorrichtung (5) zum Einbringen des gasförmigen Kraftstoffs in die Verbrennungskraftmaschine (1), eine Zündvorrichtung (6) zum Zünden des gasförmigen Kraftstoffs, eine mit der Verbrennungskraftmaschine (1) mechanisch koppelbare Elektromaschine (4), eine Vergleichsvorrichtung (7) zum Vergleichen des ermittelten IST-Betriebsdrehmoments mit einem bei Verwendung eines Kraftstoffs mit einer bekannten Kraftstoffqualität zu erwartenden SOLL-Betriebsdrehmoment der Verbrennungskraftmaschine (1) und eine Motorsteuerungsvorrichtung (9) zum Steuern der Verbrennungskraftmaschine (1) sowie zum Anpassen des IST-Betriebsdrehmoments der Verbrennungskraftmaschine (1) an das SOLL-Betriebsdrehmoment durch Anpassen einer Einbringmenge des gasförmigen Kraftstoffs in die Verbrennungskraftmaschine (1),
**dadurch gekennzeichnet,**
**dass** das hybride Antriebssystem (2) zur Durchführung eines Verfahrens nach einem der Ansprüche 1 bis 6 ausgebildet ist.

8. Hybrides Antriebssystem (2) nach Anspruch 7,
**dadurch gekennzeichnet,**
**dass** die Elektromaschine (4) zum Antreiben des Kraftfahrzeugs (3) oder als Riemenstartergenerator oder als Anlasser ausgebildet ist.

9. Kraftfahrzeug (3), aufweisend ein hybrides Antriebssystem (2),
**dadurch gekennzeichnet,**
**dass** das hybride Antriebssystem (2) gemäß einem hybriden Antriebssystem (2) nach Anspruch 7 oder 8 ausgebildet ist.

## Claims

1. Method for adapting a combustion engine (1) of a hybrid drive system (2) of a motor vehicle (3) to a gaseous fuel of an unknown fuel grade, wherein the hybrid drive system (2) comprises an electric machine (4) that can be mechanically coupled to the combustion engine (1), comprising the following steps:
- driving (100)
the combustion engine (1) to a drag speed by means of the electric machine (4) of the hybrid drive system (2);
- introducing (200)
the gaseous fuel into the combustion engine (1) by means of a fuel inlet device (5) of the hybrid drive system (2);
- igniting (300)
the gaseous fuel by means of an ignition device (6) of the hybrid drive system (2);
- ascertaining (400)
an actual operating torque of the combustion engine (1) by means of the electric machine (4) mechanically coupled to the combustion engine (1); and
- comparing (500),
by means of a comparator (7), the ascertained ACTUAL operating torque to a TARGET operating torque of the combustion engine (1) to be expected when using a fuel of a known fuel grade;
- determining (600)
a corrective value for adapting the ACTUAL operating torque of the combustion engine (1) to the TARGET operating torque by means of an engine control device (9) of the hybrid drive system (2); and
- adapting (600),
on the basis of the corrective value, the ACTUAL operating torque of the combustion engine (1) to the TARGET operating torque by means of the engine control device (9) of the hybrid drive system (2),
**characterized in that** a drag torque of the combustion engine (1) is ascertained by means of the electric machine (4) while the combustion engine (1) is being driven (100), wherein the ascertained drag torque is taken into account during the determination (600) of the fuel grade of the gaseous fuel.

2. Method according to claim 1,
**characterized in that**
the combustion engine (1) is maintained at the drag speed by means of the electric machine (4) during the ascertainment of the ACTUAL operating torque.

3. Method according to claim 1,
**characterized in that**
the combustion engine (1) is driven at different rotational speeds by means of the electric machine (4) of the hybrid drive system (2), wherein ACTUAL operating torques for the different rotational speeds are ascertained and compared to corresponding different TARGET operating torques, wherein the ratios of the ACTUAL operating torques to the associated TARGET operating torques are taken into account during the adjustment of the introduction quantity of the gaseous fuel into the combustion engine by means of an engine control device (9) of the hybrid drive system (2).

4. Method according to one of the preceding claims,
**characterized in that**
an electric machine (4) is used which is designed to drive the motor vehicle (3).

5. Method according to one of claims 1 through 4,
**characterized in that**
an electric machine (4) is used which is designed as a belt starter generator or starter of the motor vehicle (3).

6. Method according to one of the preceding claims,
**characterized in that**
the quantity of fuel introduced into the combustion engine (1) is iteratively modified by means of the fuel inlet device (5) in such a way that the ACTUAL operating torque is adapted to the TARGET operating torque.

7. Hybrid drive system (2) for a motor vehicle (3), having a combustion engine (1) operable with a gaseous fuel, a fuel inlet device (5) for introducing the gaseous fuel into the combustion engine (1), an ignition device (6) for igniting the gaseous fuel, an electric machine (4) that can be mechanically coupled to the combustion engine (1), a comparator (7) for comparing the ascertained ACTUAL operating torque to a TARGET operating torque of the combustion engine (1) to be expected when using a fuel of a known fuel grade, and an engine control device (9) for controlling the combustion engine (1) and for adapting the ACTUAL operating torque of the combustion engine (1) to the TARGET operating torque by adjusting an introduction quantity of the gaseous fuel into the combustion engine (1),
**characterized in that**
the hybrid drive system (2) is designed to carry out a method according to one of claims 1 through 6.

8. Hybrid drive system (2) according to claim 7,
**characterized in that**
the electric machine (4) is designed to drive the motor vehicle (3) or as a belt starter generator or as a starter.

9. Motor vehicle (3) having a hybrid drive system (2),
**characterized in that**
the hybrid drive system (2) is designed according to a hybrid drive system (2) according to claim 7 or 8.

## Revendications

1. Procédé d'adaptation d'un moteur à combustion interne (1) d'un système d'entraînement hybride (2) d'un véhicule automobile (3) à un carburant gazeux de qualité du carburant inconnue, dans lequel le système d'entraînement hybride (2) présente un moteur électrique (4) pouvant être couplé mécaniquement au moteur à combustion interne (1), présentant les étapes suivantes :
- entraînement (100)
du moteur à combustion interne (1) au moyen du moteur électrique (4) du système d'entraînement hybride (2) à une vitesse de rotation de remorquage,
- introduction (200)
du carburant gazeux dans le moteur à combustion interne (1) au moyen d'un dispositif d'entrée de carburant (5) du système d'entraînement hybride (2),
- allumage (300)
du carburant gazeux au moyen d'un dispositif d'allumage (6) du système d'entraînement hybride (2),
- détermination (400)
d'un couple de fonctionnement RÉEL du moteur à combustion interne (1) au moyen du moteur électrique (4) couplé mécaniquement au moteur à combustion interne (1) et
- comparaison (500)
du couple de fonctionnement RÉEL déterminé à un couple d'utilisation de CONSIGNE du moteur à combustion interne (1) attendu lors de l'utilisation d'un carburant à qualité de carburant connue au moyen d'un dispositif de comparaison (7),
- spécification (600)
d'une valeur de correction pour l'adaptation du couple de fonctionnement RÉEL du moteur à combustion interne (1) au couple de fonctionnement de CONSIGNE au moyen d'un dispositif de commande de moteur (9) du système d'entraînement hybride (2) et
- adaptation (600)
du couple de fonctionnement RÉEL du moteur à combustion interne (1) au couple de fonctionnement de CONSIGNE sur la base de la valeur de correction au moyen du dispositif de commande de moteur (9) du système d'entraînement hybride (2),
**caractérisé en ce que,** lors de l'entraînement (100) du moteur à combustion interne (1), un couple d'inertie du moteur à combustion interne (1) est déterminé au moyen du moteur électrique (4), dans lequel le couple d'inertie déterminé est pris en compte lors de la spécification (600) de le qualité de carburant du carburant gazeux.

2. Procédé selon la revendication 1,
**caractérisé en ce**
**que,** pendant la détermination du couple de fonctionnement RÉEL, le moteur à combustion interne (1) est maintenu à la vitesse de rotation d'inertie au moyen du moteur électrique (4).

3. Procédé selon la revendication 1,
**caractérisé en ce**
**que** le moteur à combustion interne (1) est entraîné à différentes vitesses de rotation au moyen du moteur électrique (4) du système d'entraînement hybride (2), dans lequel des couples de fonctionnement RÉELS sont déterminés pour les différentes vitesses de rotation et comparés à des couples de fonctionnement de CONSIGNE différents correspondants, dans lequel les rapports des couples de fonctionnement RÉELS aux couples de fonctionnement de CONSIGNE associés sont pris en compte lors de l'adaptation de la quantité d'introduction du carburant gazeux dans le moteur à combustion interne au moyen d'un dispositif de commande de moteur (9) du système d'entraînement hybride (2).

4. Procédé selon l'une quelconque des revendications précédentes,
**caractérisé en ce**
**qu'**un moteur électrique (4), qui est conçu pour entraîner le véhicule automobile (3), est utilisé.

5. Procédé selon l'une quelconque des revendications 1 à 4,
**caractérisé en ce**
**qu'**un moteur électrique (4), qui est conçu sous forme d'alternateur de démarreur à courroie ou de démarreur du véhicule automobile (3), est utilisé.

6. Procédé selon l'une quelconque des revendications précédentes, **caractérisé en ce**
**que** la quantité de carburant du carburant gazeux introduit dans le moteur à combustion interne (1) est modifiée au moyen du dispositif d'entrée de carburant (5) de manière itérative de sorte que le couple de fonctionnement RÉEL soit adapté au couple de fonctionnement de CONSIGNE.

7. Système d'entraînement hybride (2) pour un véhicule automobile (3), présentant un moteur à combustion interne (1) pouvant être actionné avec un carburant gazeux, un dispositif d'entrée de carburant (5) pour l'introduction du carburant gazeux dans le moteur à combustion interne (1), un dispositif d'allumage (6) pour l'allumage du carburant gazeux, un moteur électrique (4) pouvant être couplé mécaniquement au moteur à combustion interne (1), un dispositif de comparaison (7) pour la comparaison du couple de fonctionnement RÉEL déterminé à un couple de fonctionnement de CONSIGNE du moteur à combustion interne (1) attendu lors de l'utilisation d'un carburant à qualité de carburant connue et un dispositif de commande de moteur (9) pour la commande du moteur à combustion interne (1) ainsi que pour l'adaptation du couple de fonctionnement RÉEL du moteur à combustion interne (1) au couple de fonctionnement de CONSIGNE par adaptation de la quantité d'introduction du carburant gazeux dans le moteur à combustion interne (1),
**caractérisé en ce**
**que** le système d'entraînement hybride (2) est conçu pour l'exécution d'un procédé selon l'une quelconque des revendications 1 à 6.

8. Système d'entraînement hybride (2) selon la revendication 7,
**caractérisé en ce**
**que** le moteur électrique (4) est conçu pour l'entraînement du véhicule automobile (3) ou sous la forme d'un alternateur de démarreur à courroie ou d'un démarreur.

9. Véhicule automobile (3), présentant un système d'entraînement hybride (2),
**caractérisé en ce**
**que** le système d'entraînement hybride (2) est conçu conformément à un système d'entraînement hybride (2) selon la revendication 7 ou 8.
